(19) Europäisches Patentamt / European Patent Office / Office européen des brevets

(11) **EP 1 726 081 B1**

(12) **EUROPÄISCHE PATENTSCHRIFT**

(45) Veröffentlichungstag und Bekanntmachung des Hinweises auf die Patenterteilung:
**25.10.2017 Patentblatt 2017/43**

(21) Anmeldenummer: **05716937.7**

(22) Anmeldetag: **07.03.2005**

(51) Int Cl.:
***H02K 33/06*** *(2006.01)*

(86) Internationale Anmeldenummer:
**PCT/EP2005/051007**

(87) Internationale Veröffentlichungsnummer:
**WO 2005/086325 (15.09.2005 Gazette 2005/37)**

(54) **LINEARE ANTRIEBSEINHEIT MIT SCHWINGUNGSANKERTEIL UND FEDER**

LINEAR DRIVE UNIT WITH AN OSCILLATING ARMATURE PART AND A SPRING

UNITE D'ENTRAINEMENT LINEAIRE COMPORTANT UN CORPS D'ANCRAGE OSCILLANT ET UN RESSORT

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **05.03.2004 DE 102004010849**

(43) Veröffentlichungstag der Anmeldung:
**29.11.2006 Patentblatt 2006/48**

(73) Patentinhaber: **BSH Hausgeräte GmbH**
**81739 München (DE)**

(72) Erfinder:
- **REINSCHKE, Johannes**
  **90419 Nürnberg (DE)**
- **RIES, Günter**
  **91056 Erlangen (DE)**

(56) Entgegenhaltungen:
**DE-A1- 19 805 455** **DE-B- 1 143 578**
**US-B1- 6 323 568**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**EP 1 726 081 B1**

## Beschreibung

Die Erfindung bezieht sich auf eine lineare Antriebseinheit mit mindestens einer Erregerwicklung, mit einem von dem Magnetfeld der Wicklung in eine lineare, um eine Mittenposition in einer axialen Richtung oszillierende Schwingung zu versetzenden magnetischen Ankerteil und mit mindestens einer ortsfest eingespannten Federn, die in Bewegungsrichtung wirkend an dem Ankerteil mit ihrem schwingungsfähigen Ende angreift.

Eine entsprechende Antriebseinheit geht aus der JP 2002-031054 A oder aus DE 198 05 455 A1 hervor. Die DE 1143 578 offenbart eine lineare Antriebseinheit gemäß dem Oberbegriff des Anspruchs 1. Entsprechende Antriebseinheiten werden insbesondere dafür eingesetzt, Pumpkolben von Verdichtern in eine lineare, oszillierende Schwingung zu versetzen. Das System aus einem derartigen Verdichter mit linearer Antriebseinheit wird deshalb auch als Linearverdichter bzw.-kompressor bezeichnet (vgl. die eingangs genannte JP-A-Schrift).

Bei entsprechenden bekannten Linearverdichtern bildet der Ankerteil mit Blattfedern, die im Allgemeinen eine kreisscheibenförmige Gestalt haben (vgl. die eingangs genannte JP-A-Schrift), ein Feder-Masse-System mit einer bestimmten Eigenfrequenz. Soll der Linearverdichter mit 50 Hz (d. h. mit der Netzfrequenz) schwingen, so wurde nach dem bisherigen Stand der Technik die Federkonstante der beiden Blattfedern in Verbindung mit der Ankermasse so ausgelegt, dass die Eigenfrequenz des Feder-Masse-System gleich 50 Hz war. Ferner entsprach die Ruhelage der Federn der Mittenposition der gewünschten Ankerschwingung. Im Betrieb liefert ein so ausgelegter Linearverdichter nur einen begrenzten Wirkungsgrad und zeigt ein verhältnismäßig träges Anlaufverhalten.

Aufgabe der vorliegenden Erfindung ist es deshalb, den linearen Antrieb mit den eingangs genannten Merkmalen dahingehend zu verbessern, dass er gegenüber dem Stand der Technik einen vergleichsweise höheren Wirkungsgrad sowie einen leichteren und schnelleren Anlauf ermöglicht.

Zur Lösung dieser Aufgabe weist die lineare Antriebseinheit die in Anspruch 1 angegebenen Merkmale auf. Demgemäß soll in der Mittenposition des Ankerteil der Angriffspunkt der Feder an dem Ankerteil bezüglich ihrer Einspannstelle axial um eine vorbestimmte Wegstrecke verschoben sein, wodurch sich eine Vorspannung der Feder ergibt, wobei die Feder als quer zur Bewegungsrichtung des Ankerteils eingespannte Blattfeder gestaltet ist. Unter der Mittenposition des Ankerteils wird dabei die Lage des Ankerteils verstanden, die dieser während seiner Schwingungsphase zwischen seinen beiden maximalen seitlichen Auslenkungen einnimmt. Befindet sich der Ankerteil in seiner Ruhelage, so wird dieser aufgrund der dann gegebenen Vorspannung der Feder gegenüber der Mittenposition nach einer Seite hin verschoben.

Die mit dieser Ausgestaltung der Antriebseinheit verbundenen Vorteile sind insbesondere in geringeren elektrischen Verlusten, einem höheren Wirkungsgrad, einer leichteren Steuerbarkeit und Regelbarkeit der Ankerbewegung zu sehen. Außerdem werden damit auch die Anlaufeigenschaften der Antriebeinheit verbessert.

Vorteilhafte Ausgestaltungen der erfindungsgemäßen Antriebseinheit gehen aus den abhängigen Ansprüchen hervor. Dabei kann die Ausführungsform nach Anspruch 1 mit den Merkmalen eines der Unteransprüche oder vorzugsweise auch mit denen aus mehreren Unteransprüchen kombiniert werden. Demgemäß können für die Antriebseinheit zusätzlich noch folgende Merkmale vorgesehen werden:

- Außerdem können mehrere Federn zu beiden Seiten der Mittenposition vorgesehen sein. So ist eine Halterung und Führung des Ankerteil möglich.
- Ferner kann vorteilhaft der Ankerteil mit wenigstens einem Pumpkolben eines Verdichters verbunden sein, wobei die axiale Verschiebung des Angriffspunktes der wenigstens einen Feder an dem Ankerteil in Richtung von dem Verdichter wegführen vorgesehen wird. Mit dieser Maßnahme werden gerade die Anlaufeigenschaften des Systems aus Ankerteil und Kolben verbessert.
- Besonders vorteilhaft können Federn mit geringer Federkonstanten bzw. Steifigkeit vorgesehen werden. Gerade derartig ausgebildete Federn sind besonders geeignet für die erfindungsgemäße Verschiebung ihrer Angriffspunkte an dem Ankerteil.
- Vorzugsweise wird die axiale Verschiebung des Angriffspunktes der wenigstens einen Feder in Abhängigkeit von ihrer Federkonstanten gewählt.
- Außerdem ist es als besonders vorteilhaft anzusehen, wenn die Federkonstante der wenigstens einen Feder so bemessen wird, dass die Eigenfrequenz der Antriebseinheit im Zusammenwirken mit der gesamten schwingenden Masse geringer ist als die Frequenz der antreibenden Magnetkraft.

Weitere vorteilhafte Ausgestaltungen der erfindungsgemäßen Antriebseinheit gehen aus den vorstehend nicht angesprochenen Ansprüchen und der Zeichnung hervor.

Die Erfindung wird nachfolgend an Hand der Zeichnung noch weiter erläutert. Dabei zeigen

deren Figur 1 schematisch von einem Querschnitt durch eine erfindungsgemäße Antriebseinheit den bezüglich einer Symmetrieachse oberen Teil,

deren Figur 2 die Ankerbewegung und elektrisch eingeprägte Kraft in einer solchen Antriebseinheit und

deren Figur 3 einen Simulationsaufbau zur Auslegung der Federn.

Für eine erfindungsgemäße Antriebseinheit können an sich bekannte, in Schwingungs-/ Bewegungsrichtung ihres Ankerteil wirkende Blattfedern verwendet werden. Besonders geeignet erscheint die Verwendung von wenigstens einer Blattfeder, vorzugsweise von zwei Blattfedern. Solche Blattfedern seien für das nachfolgende Ausführungsbeispiel ausgewählt. Sie ermöglichen bei geringer Steifigkeit bzw. Federkonstanten k in der zu der Ebene der Feder senkrechten Schwingungs- /Bewegungsrichtung dennoch eine hinreichend gute seitliche Stabilisierung oder Halterung des schwingenden Ankerteil senkrecht zu dessen Bewegungsrichtung. Selbstverständlich sind aber auch andere Federtypen wie Spiral--oder Schraubenfedern anwendbar. Zu einer seitlichen Führung können auch in bekannter Weise Lager vorgesehen werden.

Figur 1 zeigt schematisch im Wesentlichen nur den oberen Teil eines Querschnitts durch eine zweiteilige lineare Antriebseinheit 10 nach der Erfindung; d. h., in der Figur sind nur die Einzelheiten des Teils der Einheit dargestellt, die sich auf einer Seite einer Symmetrieachse S, die sich in einer axialen Schwingungsrichtung erstreckt, befinden.

Entsprechend symmetrisch aufgebaute Antriebseinheiten sind an sich bekannt (vgl. z. B. US 6 323 568 B1). Die erfindungsgemäße Antriebseinheit 10 umfasst mindestens eine Erregerwicklung 11, der mindestens ein magnetflussführender Jochkörper 12 zugeordnet ist. In einer zentralen, kanalartigen Öffnung oder einem schlitzartigen Spalt 13 dieses Jochkörpers befindet sich ein magnetischer Anker oder Ankerteil 15. Dieser Anker enthält zwei axial hintereinander angeordnete Permanentmagneten 9a und 9b, deren gegensinnigen Magnetisierungsrichtungen durch gepfeilte Linien m1 und m2 angedeutet sind. Er kann in dem sich ändernden magnetischen Feld der Wicklung 11 in axialer Richtung eine oszillierende Bewegung ausführen, wobei er um eine Mittenposition Mp schwingt. Die maximale Auslenkung aus dieser Mittenposition in axialer Richtung x, d. h. die Schwingungsamplitude ist mit $+L_1$ bzw. $-L_2$ bezeichnet.

Wie ferner in der Figur angedeutet ist, sollen die beiden Blattfedern 2 und 2', die zu beiden Seiten der Mittenposition Mp an verlängerten Teilen des Ankers 15 an Angriffspunkte A bzw. A' angreifen, so befestigt sein, dass sie in der gezeigten Mittenstellung des Ankers 15 bereits eine Kraft in x-Richtung ausüben. Mit $x_0$ und $-x_0$ sind die (Ausgangs-)Positionen der Angriffspunkte A und A' der Federn 2 und 2' unter Ausbildung der Vorspannung bezeichnet, die sich bei einer symmetrischen Anordnung des Ankerteils 15 mit seinen beiden Magnetteilen 9a und 9b bzgl. der Mittenposition Mp ergeben. Dabei wird vorteilhaft die Federkonstante k der wenigstens einen Feder so bemessen, dass die Eigenfrequenz $f_0 = \frac{1}{2\pi}\sqrt{\frac{k}{m}}$ der Antriebseinheit im Zusammenwirken mit der gesamten schwingenden Masse m geringer ist als die Frequenz der von der Erregerwicklung hervorzurufenden antreibenden Magnetkraft. Die Größe von k lässt sich dabei mittels Rechenverfahren bestimmen.

Bei der erfindungsgemäßen Antriebseinheit ist also die Ruhestellung des Ankers, in der die Federkräfte gerade aufgehoben werden, von der Mittenposition um eine vorbestimmte Wegstrecke $\Delta x$ nach einer Seite hin verschoben. Die damit verbundene Vorspannkraft soll dabei seitlich in die x-Richtung wirken, wo sich ein Verdichter V bzw. sein Pumpkolben befindet. Hierzu geht zumindest auf dieser Seite der Anker 15 axial in einen seitlichen, nicht näher ausgeführte Verlängerungsteil 16 über, der starr mit dem Pumpkolben des Verdichters V verbunden ist. Entsprechende, mit linearen Antriebseinheiten verbundene Verdichter von Linearkompressoren und ihre Einzelteile gehören zum Stand der Technik (vgl. z. B. die genannte JP 2002-031054 A oder die US 6 323 568 B1). Auf ihre Darstellung ist deshalb verzichtet.

Figur 1 zeigt den Anker 15 zu dem Zeitpunkt, da er sich bei seiner oszillierenden Bewegung gerade symmetrisch zu der Mittenposition Mp befindet. In dieser Position sind folglich die ortsfest an Befestigungspunkten B bzw. B' befestigten Federn 2 und 2'an ihren Angriffspunkten A bzw. A' gerade um die Wegstrecke $\Delta x$ nach der von der Verdichterseite wegführenden Seite hin verbogen. Dies führt dazu, dass der Anker in der Ruhestellung, in der die Federkräfte nicht wirken, von seiner (gezeigten) Mittelstellung in Richtung auf den Verdichter V hin verschoben wird.

Für das Diagramm der Figur 2 ist eine Bewegung des Mittelpunkts des Ankers 15 zwischen den Punkten $x = -L_2$ und $x = +L_1$ angenommen, wobei $L_1$ und $L_2$ jeweils z.B. ungefähr 10 mm betragen. Die Figur zeigt ebenfalls beispielhaft die elektrisch eingeprägte Kraft $F_{el}$ (Kurve K1) in N und die Position x (Kurve K2) in mm in Abhängigkeit von der Zeit in sec. Die Stellen der Richtungsumkehr des Ankers sind durch gestrichelte, mit Ru bezeichnete Linien mit verstärkter Linienbreite angedeutet.

**Grundlagen zur Federauslegung eines Systems aus Antriebseinheit und Kompressor(Verdichter)**

Für die nachfolgenden Betrachtungen wird von einer linearen Antriebseinheit 10 ausgegangen, deren Anker 15 mit einem Pumpkolben eines Verdichters V bzw. Kompressors verbunden ist. Vereinfachend sei nachfolgend angenommen, dass $L_1 = L_2 = L$ ist.

Die elektromagetisch auf den Anker 15 eingeprägte Kraft $F_{el}$ soll betragsmäßig entweder null sein oder einen festen Wert annehmen können, wobei das Vorzeichen der Kraft immer so gewählt ist, dass die Kraft in Bewegungsrichtung wirkt. Die elektrische Kraft $F_{el}$ sei ungleich Null nur für einen Anteil $a$ des Weges ($0 < a < 1$; $a$ wird nachstehend als *"duty cycle"* bezeichnet). Es sei $k$ die Summe der Federkonstanten in Bewegungsrichtung und $x_0$ die Federruhelage gegenüber der Ankermittellage.

Für $\dot{x} < 0$ , was dem Rücklauf weg vom Verdichter entspricht, ist die dem Anker elektrisch zugeführte Energie gegeben durch

$$E_{el-} = F_{el} \cdot 2L \cdot a \qquad \text{Eq. 1}$$

und vom Ankertotpunkt $x = +L$ zum Ankertotpunkt $x = -L$ ändert sich die potentielle Energie der Feder um

$$\Delta E_{\text{Feder}} = (k/2)(-L - x_0)^2 - (k/2)(L - x_0)^2 \ . \qquad \text{Eq. 2}$$

Beide Energien müssen gleich sein, d.h.

$$\Delta E_{\text{Feder}} = E_{el-} \qquad \text{Eq. 3}$$

Für $\dot{x} > 0$ , was dem Vorlauf hin zum Verdichter entspricht, ist die dem Anker elektrisch zugeführte Energie (wiederum) gegeben durch

$$E_{el+} = F_{el} \cdot 2L \cdot a \qquad \text{Eq. 4}$$

und vom Ankertotpunkt $x = -L$ zum Ankertotpunkt $x = +L$ ändert sich die potentielle Energie der Feder um - $\Delta E_{Feder}$.

Die insgesamt innerhalb einer Schwingung zugeführte elektrische Energie $E_{el} = E_{el+} + E_{el-}$ muss bei einer konstanten Schwingungsamplitude $L$ und vernachlässigbarer Reibung gleich der im Kompressor verbrauchten Energie $E_{comp}$ sein. Der (als konstant angenommene) Wert der elektrischen Kraft ergibt sich somit zu

$$F_{el} = \frac{E_{comp}}{4L \cdot a} \qquad \text{Eq. 5}$$

Sind die Federkonstante $k$ sowie die elektrische Energie $E_{el-}$ (d. h. die elektrische Kraft $F_{el}$, die Schwingungsamplitude $L$ und der *duty cycle* $a$) gegeben, so kann man durch Einsetzen von Eq. 1 und Eq. 2 in Eq. 3 die notwendige Federruhelage berechnen:

$$x_0 = \frac{E_{el-}}{2k \cdot L} = \frac{F_{el} \cdot 2L \cdot a}{2k \cdot L} = \frac{F_{el} \cdot a}{k} \qquad \text{Eq. 6}$$

Aus Eq. 6 erkennt man:

Die Feder muss immer in positiver Richtung vorgespannt sein, und der Vorspannungsweg ist um so geringer, je höher die Federkonstante $k$ ist.

**Verfahren zur Federauslegung**

Die Feder soll so ausgelegt werden, dass der Anker bezüglich $x = 0$ symmetrisch im Joch schwingt (d. h. zwischen $x = -L$ und $x = +L$), wobei die Frequenz $f$ der Ankerschwingung näherungsweise einem Zielwert $f_{target}$ entspricht.

Bei gegebener Ankermasse, Schwingungsamplitude $L$ und Kompressorkennlinie ist die Schwingungsfrequenz $f$ nur noch von zwei Größen abhängig: der Federkonstante $k$ und dem *duty cycle* $a$. Es gilt:

- je größer $k$, desto größer $f$,
- je kleiner $a$, desto größer $f$.

Die Federauslegung kann wie folgt erfolgen:

1. Festlegen der Schwingungsamplitude *L* und Bestimmung der Kompressorenergie $E_{comp}$ unter Normbedingungen, wo eine optimale Federauslegung angestrebt wird.
2. Festlegen des *duty cycle a* und Berechnung der elektrischen Kraft $F_{el}$ nach Eq. 5 (bzw. Berechnung des der Kraft entsprechenden Spulenstromes).
3. Festlegen der Federkonstante *k* und Berechnung der Federruhelage $x_0$ nach Eq. 6.
4. Simulation des für Figur 3 angenommenen Feder- Kompressor-Masse-Systems und Bestimmung der Schwingungsfrequenz *f*.
5. Falls *f* und der Zielwert $f_{target}$ zu stark voneinander abweichen, Rücksprung zu 2. (Änderung des *duty cycle a*) oder 3. (Änderung der Federkonstante k).

**Beispielrechnungen**

Die Beispielrechnungen beziehen sich auf einen bekannten Kompressor bei einem Hub von 2L = 20 mm und Normdruckbedingungen ($p_{max}$ - $p_{min}$ = (7.7 - 0.6) bar). Da das Totvolumen als verschwindend klein angenommen wird, erzeugt es auch keine rückstellende Kraft. Die pro Schwingung im Kompressor geleistete mechanische Arbeit beträgt unter diesen Bedingungen 0.7753 J. Soll die mechanische Leistung 40W betragen, so wird eine Schwingungsfrequenz von 51. 6 Hz benötigt.

Im Simulationsblockschaltbild nach Figur 3 haben *m* (Masse) und c (Reibkoeffizient) die Werte 90 g und 0.336 Ns/m.

In nachstehender Tabelle sind der *duty cycle a* und die Federkonstante *k* als Eingangsgrößen zu betrachten, während die elektrische Kraft $F_{el}$, die Federruhelage $x_0$ und die Schwingungsfrequenz *f* die Ergebnisgrößen der Rechnung sind.

| duty cycle *a* [-] | Federkonst. *k* [N/mm] | el. Kraft $f_{el}$ [N] | Ruhelage $x_0$ [mm] | Frequenz *f* [Hz] |
|---|---|---|---|---|
| 1.0 | 2.50 | 19.4 | 7.8 | 35.2 |
| 0.8 | 2.50 | 24.2 | 7.8 | 40.4 |
| 0.5 | 2.50 | 38.8 | 7.8 | 46.2 |
| 0.7 | 5.00 | 27.7 | 3.9 | 51.0 |

**Bezugszeichenliste**

| | |
|---|---|
| 2, 2' | Blattfeder |
| 9a, 9b | Permanentmagnete |
| 10 | Antriebseinheit |
| 11 | Erregerwicklung |
| 12 | Jochkörper |
| 13 | kanalartige Öffnung |
| 15 | Anker |
| 16 | Verlängerungsteil |
| MI | Mittellinie |
| Mp | Mittenposition |
| S | Symmetrieachse |
| A, A' | Angriffsstellen |
| M1, m2 | Magnetisierungsrichtungen |
| x | axiale Ausdehnung |
| $\Delta x$ | Verschiebung |
| $L_1$, $L_2$ | Auslenkungen |
| $x_0$ | Ausgangsposition |
| B, B' | Befestigungspunkte |
| V | Verdichter |
| K1, K2 | Kurven |

$F_{el}$ Kraft
$R_u$ Richtungsumkehrstellen

## Patentansprüche

1. Lineare Antriebseinheit (10) mit mindestens einer Erregerwicklung (11), mit einem von dem Magnetfeld der Wicklung in eine lineare, um eine Mittenposition (Mp) in einer axialen Richtung (x) oszillierende Schwingung zu versetzenden magnetischen Ankerteil (15) und mit mindestens einer ortsfest an einer Einspannstelle eingespannten Feder, die in Bewegungsrichtung wirkend an dem Ankerteil mit ihrem schwingungsfähigen Ende (A, A') angreift, wobei die mindestens eine Feder (2, 2') als quer zur Bewegungsrichtung des Ankerteils (15) eingespannte Blattfeder gestaltet ist, **dadurch gekennzeichnet, dass** in der Mittenposition (Mp) des Ankerteils (15) der Angriffspunkt (A, A') der Feder (2, 2') an dem Ankerteil (15) bezüglich ihrer Einspannstelle (B, B') axial um eine vorbestimmte Wegstrecke ($\Delta x$) verschoben ist, wodurch sich eine Vorspannung der Feder (2, 2') ergibt, so dass der Ankerteil (15) in seiner Ruhelage aufgrund der Vorspannung der Feder (2, 2') gegenüber der Mittenposition (Mp) nach einer Seite hin verschoben ist.

2. Antriebseinheit nach Anspruch 1, **dadurch gekennzeichnet, dass** mehrere Federn (2, 2') zu beiden Seiten der Mittenposition (Mp) vorgesehen sind.

3. Antriebseinheit nach Anspruch 1 oder 2, **dadurch gekennzeichnet, dass** der Ankerteil (15) mit wenigstens einem Kolben eines Verdichters (V) verbunden ist, wobei die axiale Verschiebung ($\Delta x$) des Angriffspunkts (A, A') der Feder (2, 2') an dem Ankerteil (15) in Richtung von dem Verdichter (V) wegführend vorgesehen ist.

4. Antriebseinheit nach einem der vorangehenden Ansprüche, **dadurch gekennzeichnet, dass** die Federsteifigkeit der mindestens einen Feder (2, 2') so bemessen ist, dass die Eigenfrequenz der Antriebseinheit (10) im Zusammenwirken mit der gesamten schwingenden Masse geringer ist als die Frequenz der von der Erregerwicklung (11) hervorgerufenen antreibenden Magnetkraft.

5. Antriebseinheit nach einem der vorangehenden Ansprüche, **dadurch gekennzeichnet, dass** die axiale Verschiebung ($\Delta x$) des Angriffspunkts (A, A') der Feder (2, 2') in Abhängigkeit von ihrer Federsteifigkeit gewählt ist.

## Claims

1. Linear drive unit (10), with at least one excitation winding (11), with a magnetic armature part (15) to be brought into a linear oscillation about a centre position (Mp) in an axial direction (x) by the magnetic field of the winding and with at least one spring clamped in a fixed manner at a clamping point, the oscillating end (A, A') of said spring engaging on the armature part while acting in the movement direction, wherein the at least one spring (2, 2') is embodied as a leaf spring clamped transverse to the movement direction of the armature part (15),
**characterised in that** in the centre position (Mp) of the armature part (15) the engagement point (A, A') of the spring (2, 2') at the armature part (15) is displaced axially with regard to its clamping point (B, B') by a predefined route ($\Delta x$), whereby a pretension of the spring (2, 2') results, so that the armature part (15) in its idle position is displaced to one side compared to the centre position (Mp) due to the pretensioning of the spring (2, 2').

2. Drive unit according to claim 1, **characterised in that** a plurality of springs (2, 2') are provided on both sides of the centre position (Mp).

3. Drive unit according to claim 1 or 2, **characterised in that** the armature part (15) is connected to at least one piston of a compressor (V), wherein the axial displacement ($\Delta x$) of the engagement point (A, A') of the spring (2, 2') on the armature part (15) is provided in the direction so as to lead away from the compressor (V).

4. Drive unit according to one of the preceding claims, **characterised in that** the spring stiffness of the at least one spring (2, 2') is dimensioned such that the natural frequency of the drive unit (10) when interacting with the overall oscillating mass is lower than the frequency of the driving magnetic force produced by the excitation winding (11).

5. Drive unit according to one of the preceding claims, **characterised in that** the axial displacement ($\Delta x$) of the engagement point (A, A') of the spring (2, 2') is selected as a function of its spring stiffness.

## Revendications

1. Unité d'entraînement linéaire (10) comprenant au moins un enroulement d'excitation (11), comprenant une partie d'induit (15) magnétique à mettre dans une vibration oscillante linéaire dans une direction axiale (x) autour d'une position médiane (Mp) par le champ magnétique de l'enroulement, et comprenant au moins un ressort tendu de manière stationnaire à un point de fixation, lequel ressort, en agissant en direction de déplacement, a prise sur la partie d'induit avec son extrémité (A, A') apte à la vibration, l'au moins un ressort (2, 2') étant conçu comme ressort à lame tendu transversalement à la direction de déplacement de la partie d'induit (15), **caractérisée en ce qu'**en position médiane (Mp) de la partie d'induit (15), le point d'attaque (A, A') du ressort (2, 2') sur la partie d'induit (15) est décalé axialement d'une trajectoire ($\Delta x$) prédéterminée par rapport à son point de fixation (B, B'), sur quoi il en résulte une précontrainte du ressort (2, 2') de sorte que la partie d'induit (15), dans sa position de repos en raison de la précontrainte du ressort (2, 2'), est décalée vers un côté par rapport à la position médiane (Mp).

2. Unité d'entraînement selon la revendication 1, **caractérisée en ce que** plusieurs ressorts (2, 2') sont ménagés sur les deux côtés de la position médiane (Mp).

3. Unité d'entraînement selon la revendication 1 ou 2, **caractérisée en ce que** la partie d'induit (15) est reliée à au moins un piston d'un compresseur (V), le déplacement axial ($\Delta x$) du point d'attaque (A, A') du ressort (2, 2') sur la partie d'induit (15) étant ménagé en s'éloignant du compresseur (V).

4. Unité d'entraînement selon l'une quelconque des revendications précédentes, **caractérisée en ce que** la rigidité de ressort de l'au moins un ressort (2, 2') est dimensionnée de sorte que la fréquence propre de l'unité d'entraînement (10), en coopération avec la totalité de la masse oscillante, soit inférieure à la fréquence de la force magnétique d'entraînement causée par l'enroulement d'excitation (11).

5. Unité d'entraînement selon l'une quelconque des revendications précédentes, **caractérisée en ce que** le déplacement axial ($\Delta x$) du point d'attaque (A, A') du ressort (2, 2') est sélectionné en fonction de sa rigidité de ressort.

[Fig. ]

FIG 1

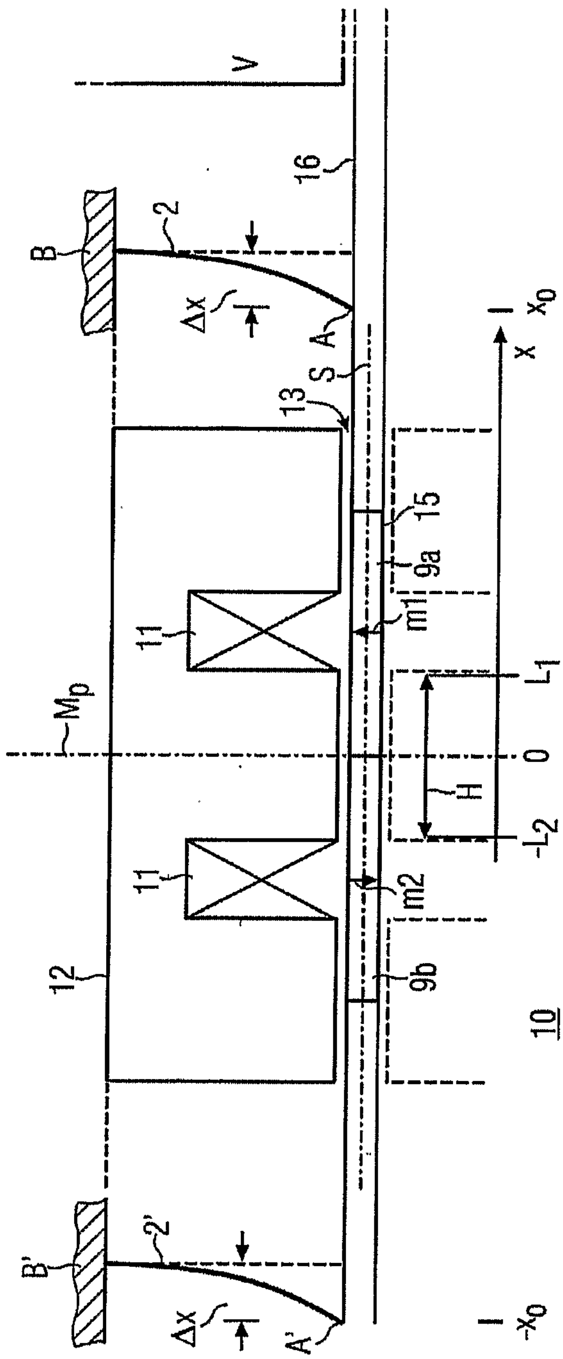

[Fig. ]

FIG 2

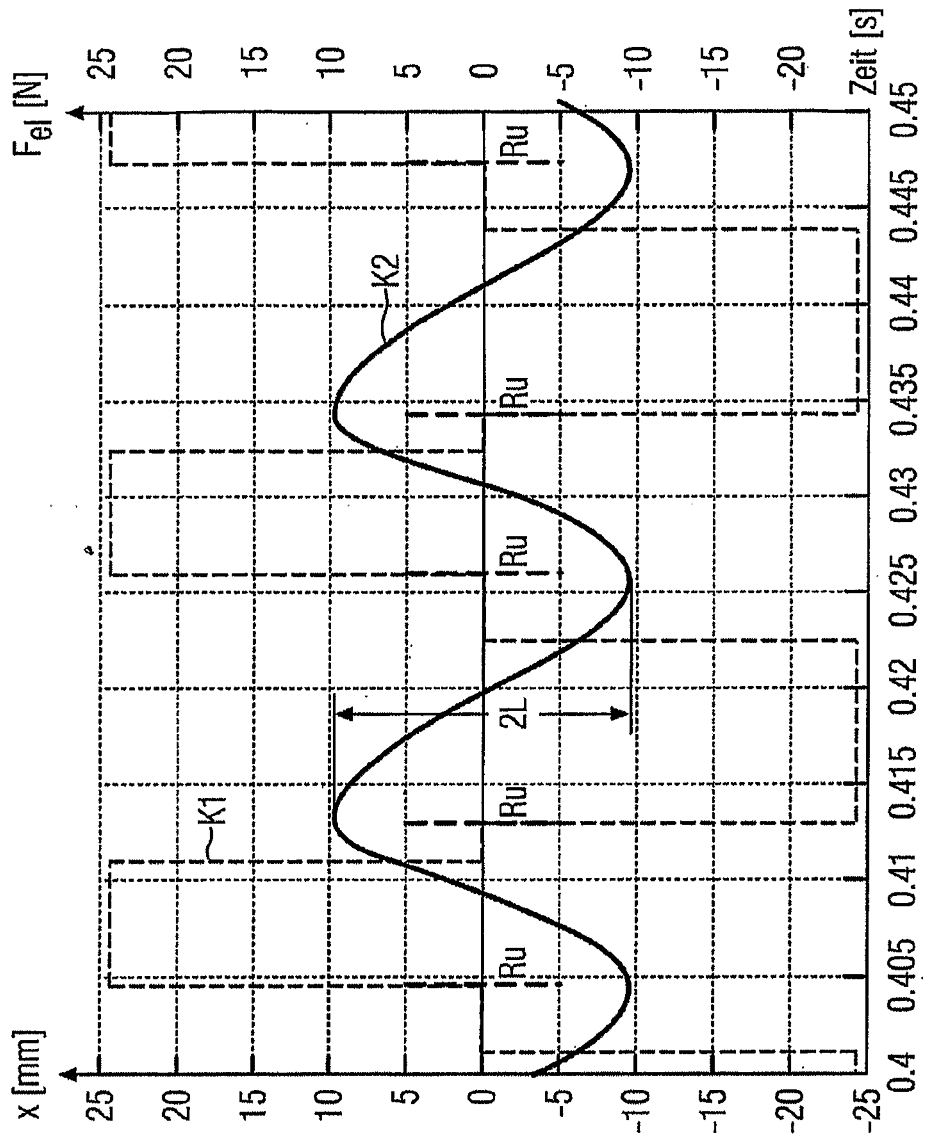

[Fig. ]

FIG 3

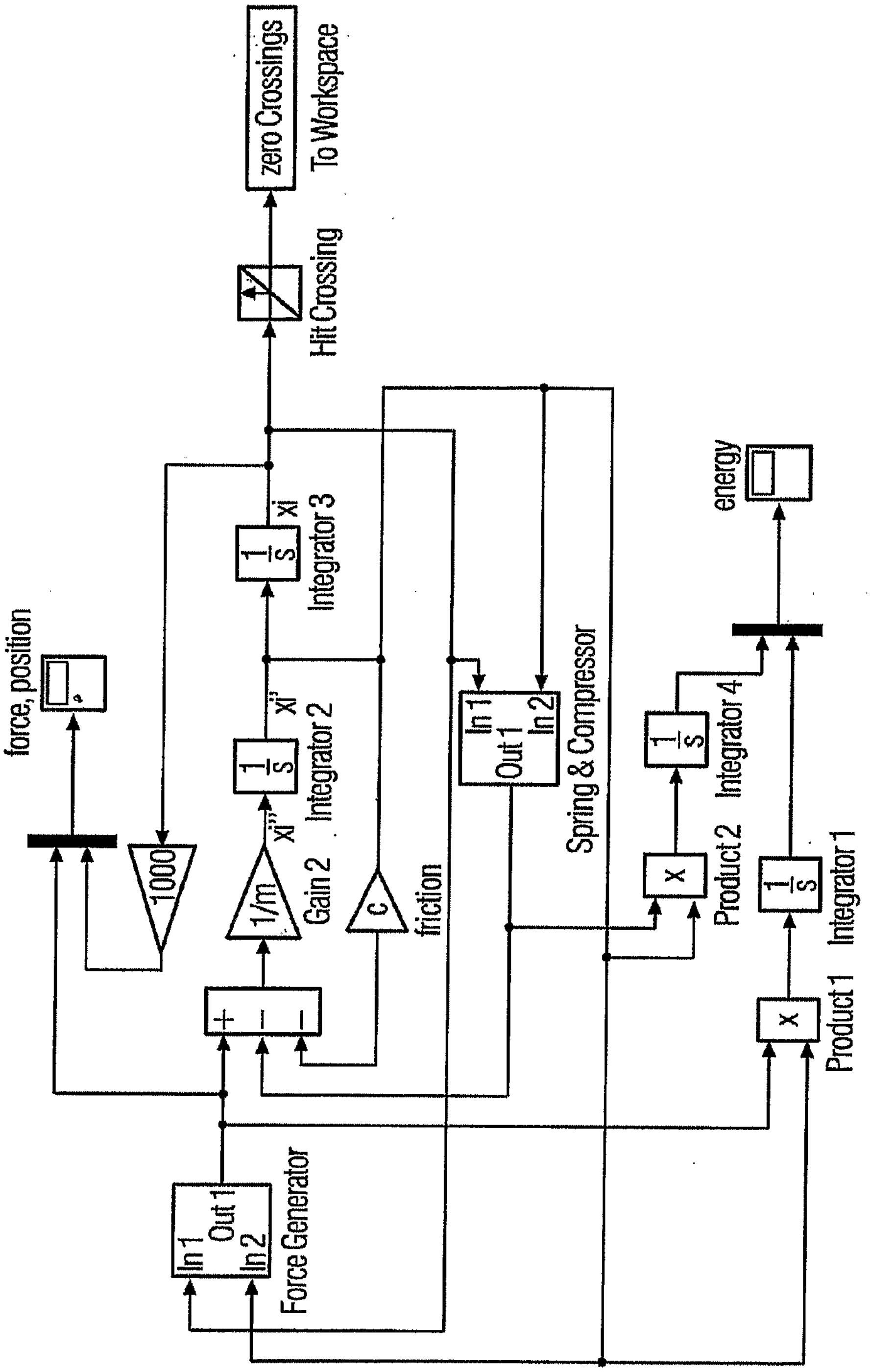
zero Crossings
To Workspace
Hit Crossing
xi
Integrator 3
xi'
Integrator 2
xi''
Gain 2
1/m
1000
c
friction
force, position
energy
In 1
Out 1
In 2
Spring & Compressor
Integrator 4
Product 2
Integrator 1
Product 1
In 1
Out 1
In 2
Force Generator

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2002031054 A
- DE 19805455 A1
- DE 1143578
- US 6323568 B1